# EUROPÄISCHE PATENTSCHRIFT

(11) **EP 3 774 268 B1**
(45) Veröffentlichungstag und Bekanntmachung des Hinweises auf die Patenterteilung: **03.11.2021**
(21) Anmeldenummer: 20732847.7
(22) Anmeldetag: 12.06.2020
(51) Int. Cl.: B29C 45/76

(54) **VERFAHREN ZUM BEREITSTELLEN EINES BETRIEBSSYSTEMS EINER MASCHINENSTEUERUNG**
METHOD FOR PROVIDING AN OPERATING SYSTEM OF A MACHINE CONTROLLER
PROCÉDÉ POUR FOURNIR UN SYSTÈME D'EXPLOITATION D'UNE COMMANDE DE MACHINE

(30) Priorität: 19.06.2019 DE 102019208937
(43) Veröffentlichungstag der Anmeldung: 17.02.2021
(73) Patentinhaber: Arburg GmbH + Co KG, 72290 Loßburg (DE)
(72) Erfinder: DUFFNER, Eberhard, 72181 Starzach (DE)
(74) Vertreter: RPK Patentanwälte Reinhardt, Pohlmann und Kaufmann Partnerschaft mbB
(86) Internationale Anmeldenummer: PCT/EP2020/066252
(87) Internationale Veröffentlichungsnummer: WO 2020/254196

(56) Entgegenhaltungen:
- EP-A2- 1 297 941

## Beschreibung

Die Erfindung betrifft ein Verfahren zum Bereitstellen eines Betriebssystems einer Maschinensteuerung für eine Spritzgießmaschine zur Verarbeitung von Kunststoffen und anderer plastifizierbarer Maßen auf einem von der Spritzgießmaschine unabhängigen Zielsystem mit den Merkmalen des Anspruches 1.

Wenn im Rahmen dieser Erfindung von einem "lauffähigen Einstelldatensatz" die Rede ist, so handelt es sich dabei um einen Datensatz von Einstelldaten, mit denen eine Spritzgießmaschine zur Produktion von Spritzteilen betrieben werden kann, ohne dass es in der Regel eines weiteren Eingriffs eines Benutzers bedarf.

Unter "konvertierten Betriebssysteminformationen" werden im Rahmen dieser Anmeldung Informationen über ein Betriebssystem verstanden, welche an ein bestimmtes Zielsystem angepasst sind. Das Betriebssystem einer Spritzgießmaschine z.B. ist lediglich ein Code, der mittels Einlesen der spezifischen Maschinen-Konfigurationsdaten zur spezifischen Maschine wird.

Unter einem "digitalen Zwilling" wird im Rahmen dieser Anmeldung eine digitale Kopie einer realen Maschine beispielsweise einer Spritzgießmaschine verstanden. Der digitale Zwilling weist dabei alle Eigenschaften, Spezifikationen und Einstellmöglichkeiten der realen Maschine auf. Der digitale Zwilling ist vorzugsweise eins zu eins der Betriebssystemcode, der mittels genau den gleichen Konfigurationsdaten auf einem anderen Zielbetriebssystem z.B. mittels einer App lauffähig wird.

Aus der EP 1 297 941 A2 ist ein Verfahren nach dem Oberbegriff des Anspruches 1 zum Bereitstellen eines Betriebssystems einer Maschinensteuerung für eine Spritzgießmaschine zur Verarbeitung von Kunststoffen und anderer plastifizierbarer Massen unter Verwendung eines virtuellen Modells der Spritzgießmaschine bekannt.

Aus der DE 10 2011 005 062 A1 ist ein Verfahren zum Bereitstellen von Daten eines Feldgerätes über eine Cloud-Lösung bekannt. Das Feldgerät ist an einem Netzwerk der Automatisierungstechnik angeordnet und mit anderen Feldgeräten über einen Datenbus verbunden. Die Feldgeräte kommunizieren zumindest mit einem Server eines Service-Providers, so dass ein vorkonfigurierter Datensatz um kunden- bzw. anwendungsspezifische Daten ergänzt werden kann. Ein um die Zusatzdaten erweiterter Datensatz wird dann einem entfernt angeordneten Client zur Verfügung gestellt.

Im Bereich der Kunststoff-Spritzgießmaschinen ist ein Verfahren zur interaktiven Steuerung einer Maschine aus der EP 0 573 912 B1 bekannt, bei dem in einer Datenverarbeitungseinheit ein Basiswissen und ein Datensatz über die Grundregeln des Betriebs einer Spritzgießmaschine eingespielt werden. Über einen Ablaufeditor kann ein Maschinenablauf erzeugt werden, wobei die Maschine jede Eingabe auf Plausibilität prüft und interaktiv Vorschläge für die Ergänzung des bereits bestehenden Ablaufs macht.

Eine Vorrichtung zur Verarbeitung von Kunststoffen ist in der DE 10 2004 041 891 B3 offenbart. Die Vorrichtung weist Aufzeichnungsmittel auf, welche den Rohmittelvorrat aufzeichnen oder an der Formgebungseinheit und/oder der Plastifiziereinheit vorgesehen sind und zur Aufzeichnung von Prozess- und/oder Materialparametern dienen. Durch Auswertemittel können Daten der Aufzeichnungsmittel hinsichtlich der zu erwartenden Produktionsdauer und/oder den zu erwartenden Gestehungskosten bestimmt werden. Eine Steuerungseinrichtung zur Steuerung der Materialzuführungseinrichtung kann als Endgerät (client) ausgeführt und mit einem Datennetz verbunden sein, worüber verschiedene Datendienste zur Verfügung gestellt werden. Auch ist es möglich, über die Datendienste der Steuerungseinrichtung Parameter eines Herstellungsprozesses zu verändern.

In der WO 2006/098451 A1 ist ein Verfahren zur Steuerung und Bedienung einer Produktionszelle zur Herstellung von Kunststoff-Spritzgießteilen offenbart. Es werden dort Maschinenabläufe auf Basis von verhaltensvollständigen Komponenten, die zusammen ein Domänenmodell bilden, mithilfe einer Domänensprache erstellt, verwaltet und ausgeführt. Eine bestimmte Komponente kann so komponenten- bzw. kommandoorientiert programmiert werden. Beispielsweise kann so die Komponente des Formwerkzeugs durch die Befehle Öffnen und Schließen programmiert werden.

In der CH 705456 A1 ist ein computerisiertes Maschinensteuerungssystem offenbart, welches einen anwendungsunabhängigen, maschinenspezifischen Teil und einen anwendungsspezifischen, maschinenunabhängigen Teil umfasst. Dadurch lässt sich eine bessere Integration von Maschinen verschiedener Hersteller realisieren.

Eine Vorrichtung und ein Verfahren zur Steuerung und zum Betrieb einer Produktionszelle sind in der US 2012/0185077 A1 offenbart. Maschinenabläufe, die auf Maschinensteuerungskomponenten basieren, werden mit Hilfe einer Domänensprache erstellt, verwaltet und ausgeführt. Für eine freie Konfigurierbarkeit von Maschinensteuerkomponenten wird vorgeschlagen, eine Maschinensteuerkomponente aus einem Satz von vorbestimmten Komponententypen auszuwählen und einer Maschinensteuerkomponente eine zulässige Technologie aus einem Satz von Technologien zuzuweisen, wobei für jede Technologie eines Komponententyps eine Logik gespeichert ist, die die für die Maschinensteuerkomponente und die Technologie erforderlichen Schnittstellen umfasst und definiert.

Ausgehend von diesem Stand der Technik liegt der vorliegenden Erfindung die Aufgabe zugrunde, eine Kopie einer Maschinensteuerung einem Prozessor zur Verfügung zu stellen, so dass unabhängig von der Spritzgießmaschine Einstelldaten erstellt oder verändert werden können, wobei bedarfsweise auf Herstellerdaten zurückgegriffen werden kann.

Diese Aufgabe wird durch ein Verfahren zum Bereitstellen eines Betriebssystems einer Maschinensteuerung mit den Merkmalen des Anspruches 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Verfahrensgemäß werden Informationen über ein Betriebssystem einer Maschinensteuerung einer Spritzgießmaschine bereitgestellt, welches mittels Konfigurationsdaten bereits auf eine erste Spritzgießmaschine konfigurierbar oder anpassbar ist. Dieses Betriebssystem kann dann mit allen Konfigurationsdaten als digitaler Zwilling auf ein Zielsystem unter Verwendung einer Hardware unabhängigen App zum Konvertieren der Informationen an das Zielsystem verwendet werden. Da die Maschinensteuerungssoftware an und für sich schon auf der Maschinensteuerung der Spritzgießmaschine auf die Eigenschaften der physisch vorhandenen Maschine konfiguriert ist, kann mit dem vorzugsweise identischen Konfigurationsfile von der Maschinensteuerung, das bidirektional konvertiert an das Zielsystem angepasst ist, auf dem Zielsystem mit einem Steuerungsbild der realen Maschine gearbeitet werden. Damit lassen sich dort Datensätze und insbesondere Einstelldatensätze vorzugsweise offline ursprünglich erstellen oder bestehende Einstelldatensätze verändern. Ein so erzeugter lauffähiger Einstelldatensatz wird dann vom Zielsystem auf die Spritzgießmaschine übertragen, wobei wiederum eine Anpassung über eine Hardware unabhängige App für das Betriebssystem der Maschinensteuerung erfolgt. Der so erstellte weitere Einstelldatensatz erlaubt dann einen in der Regel unmittelbaren Betrieb der Spritzgießmaschine.

Vorzugsweise wird der digitale Zwilling auf dem Zielsystem offline von der ersten Spritzgießmaschine und/oder als Plattformlösung in der Cloud betrieben, so dass die Spritzgießmaschine unabhängig weiter betrieben werden kann. Gleichzeitig ist es möglich, die Spritzgießmaschine auf die Fertigung neuer Spritzteile vorzubereiten und auch dahingehend zu überprüfen, ob die Spritzgießmaschine überhaupt für die Produktion des nächsten Auftrages geeignet ist. Dadurch kann im Vorfeld einer aktuellen Produktion bereits die Eignung der Spritzgießmaschine geprüft werden, so dass Ausfallzeiten reduziert werden.

Bevorzugterweise erhält das Zielsystem auch Produktinformationen über ein auf einer Spritzgießmaschine zu fertigendes Produkt, für das eine konkrete Berechnung eines Einstelldatensätze erfolgen kann. Die Berechnung erfolgt auf einem Prozessor ohne Postprozessor und ohne ein virtuelles Modell der Spritzgießmaschine, da aufgrund der Maschinenkonfiguration und der lokal oder vorzugsweise beim Hersteller vorliegenden Daten sämtliche Informationen vorliegen, die es gestatten, einen für die jeweilige Spritzgießmaschine lauffähigen Einstelldatensatz zu generieren.

Von Vorteil ist es, wenn zumindest dem Zielsystem, vorzugsweise aber auch der Spritzgießmaschine ein Expertenwissen zur Verfügung gestellt wird, aus dem sich ergibt, welche Komponenten und welche Konfiguration eine Maschinenkonfiguration aufweisen muss, damit ein Einstelldatensatz auf der jeweiligen Spritzgießmaschine auch lauffähig ist. Dadurch lässt sich sowohl fehlerhaften Eingaben als auch der Fertigung von Schlechtteilen vorbeugen. Gleichzeitig wird die Anlauf- oder Startphase bei Produktionsbeginn eines neuen Spritzteiles deutlich reduziert.

Ergänzend kann in vorteilhafterweise anhand des Expertenwissens und/oder auch anhand der an der jeweiligen Spritzgießmaschine bestehende Maschinenkonfiguration überprüft werden, ob der weitere Einstelldatensatz auf der ersten Spritzgießmaschine lauffähig ist. Dazu liegen dem Prozessor ausreichend Informationen vor, die eine derartige Berechnung und Überprüfung gestatten. Kommt im Ergebnis heraus, dass dies möglich ist, werden die entsprechenden Schritte auf der bestehenden Spritzgießmaschine durchgeführt. Führt das Ergebnis allerdings dazu, dass der Prozessor feststellt, dass dies auf der für die Produktion vorgesehenen Spritzgießmaschine nicht möglich ist, wird eine erforderliche Maschinenkonfiguration bestimmt. In diesem Fall wird verfahrensgemäß überprüft, ob beim Benutzer noch weitere Spritzgießmaschinen vorhanden sind, und ob von diesen Spritzgießmaschinen eine die für die Fertigung erforderliche Maschinenkonfiguration aufweist. Ist dies der Fall, wird die Produktion des Spritzteils an die ermittelte andere Spritzgießmaschine vergeben. Ist keine andere Spritzgießmaschine ermittelbar, wird der Benutzer entsprechend benachrichtigt. Durch diesen Ablauf ist es einerseits möglich, effektiv dort zu produzieren, wo eine Produktion auch möglich ist, andererseits kann der Benutzer frühzeitig erfahren, ob eine Fertigung in seinem Betrieb überhaupt möglich ist. Dies hat Kostenvorteile und trägt zu einer effektiven Produktion bei.

Vorzugsweise erhält der Benutzer im Rahmen der Benachrichtigung auch Informationen darüber, mit welchen Komponenten die bestehende Maschinenkonfiguration angepasst und umgebaut werden kann, damit der Einstelldatensatz auch auf der Spritzgießmaschine lauffähig ist. Mit anderen Worten erhält er Informationen darüber, wie er seine Spritzgießmaschine bedarfsweise aufrüsten kann, um die Produktion zu gewährleisten. Gerade hier wird der Vorteil einer frühzeitigen Vorausberechnung deutlich, da dann Umbaumaßnahmen bedarfsweise noch möglich sind.

Vorteilhafterweise wird die Maschinenkonfiguration über einen Schlüssel, ein Passwort oder einen Identifizierer, der vorzugsweise die Maschinennummer ist, in Richtung auf den Prozessor identifiziert. Über diesen Identifizierer ist die aktuelle Maschinenkonfiguration in einer Datenbank hinterlegt, die entweder lokal beim Benutzer oder extern z.B. beim Hersteller vorhanden ist. In dieser Datenbank sind die wesentlichen Informationen wie z.B. Konfigurationsdaten der Spritzgießmaschine, Wissensdaten eines Expertenwissens, Softwarefunktionalitätsdaten des Betriebssystems der Maschinensteuerung oder der Spritzgießmaschine vorhanden, auf die der Benutzer mit dem Prozessor bei Erstellung weitere Einstelldatensätze zugreifen kann. Gerade dann, wenn Informationen vorzugsweise auch auf einer Datenbank beim Hersteller zugänglich sind, kann der Benutzer von dort aus auch umfassend darüber informiert werden, welche zusätzlichen Möglichkeiten ihm zur Verfügung stehen.

Dies ist besonders von Vorteil, wenn in der Datenbank, die vorzugsweise eine Datenbank beim Hersteller ist, die aktuelle Ausstattung und Maschinenkonfiguration einer jeweils identifizierbaren Spritzgießmaschine vorhanden ist und darüber hinaus dort auch die weiteren Ausbaumöglichkeiten vorliegen. Für eine nachvollziehbare Entscheidungshilfe ist es ergänzend von Vorteil, wenn die Historie der Spritzgießmaschine im Hinblick auf ihren Auslieferungszustand und spätere Umbauten, die Wartungshistorie im Hinblick auf erfolgte Wartungsarbeiten und/oder auf der Spritzgießmaschine bereits erstellte Datensätze, die für die Herstellung von Produkten auf der Spritzgießmaschine lauffähig waren, in der Datenbank hinterlegt sind. Diese Informationen können optional und auch nur zum Teil vorliegen. Dasselbe gilt für den Fall, das mehrere Spritzgießmaschinen bei einem Benutzer vorhanden sind für die Zuordnung und Verknüpfung dieser Spritzgießmaschinen. Eine derartige Datenbank wird dann durch den Prozessor zum Erhalt weiterer Informationen bzw. zum Abgleich von Informationen kontaktiert, um daraus entsprechende Einstelldatensätze und/oder Benutzerinformationen zu erzeugen.

Eine zuverlässige und aktualisierte Berechnung und Unterstützung kann insbesondere dann erfolgen, wenn der Prozessor zumindest der Datenbank beim Hersteller zugeordnet ist oder bei einer Cloud-Lösung Zugriff hat, so dass das Verfahren vorzugsweise auf dem Prozessor beim Hersteller durchgeführt werden kann. In diesem Fall ist nämlich sichergestellt, dass diese Informationen tatsächlich auf dem neuesten Stand sind und nicht erst gegebenenfalls durch einen Fernzugriff upgedatet werden müssen.

Bevorzugterweise kann das Verfahren noch dadurch weitergebildet werden, dass auch Update-Informationen für eine Spritzgießmaschine auf der Datenbank zugänglich sind, wobei es insbesondere um Updates betreffend die Maschinenkonfiguration und einen dadurch gegebenenfalls geänderten Funktionsumfang der Spritzgießmaschine geht. Dadurch kann ein neuer Einstelldatensatz für die Spritzgießmaschine auf der Grundlage der Update-Information zur Verfügung gestellt werden, die es auch den Benutzern erleichtert, gegebenenfalls seine Maschine durch ein einfaches Update lauffähig für das jeweilige Produkt oder z.B. energieeffizienter zu machen.

In vorteilhafter Weise kann ein Ähnlichkeitsassistent bereitgestellt werden, der vorzugsweise anonymisierte Ähnlichkeiten zwischen bereits gefertigten Produkten und zur fertigenden Produkten sowie auch zwischen Maschinenkonfigurationen, mit denen Produkte bereits gefertigt wurden und zu fertigen sind, ermittelt und dies anhand von Spritzgießmaschinen, die bei verschiedenen Benutzern vorhanden sind. Damit kann auf ein gemeinsam von verschiedenen Benutzern erarbeitetes Knowhow zurückgegriffen werden, das eine zuverlässige Produktion von Spritzteilen unterstützt. Zu diesem Zweck werden die ermittelten Ähnlichkeiten zum Erstellen des wenigstens einen neuen oder Verändern des wenigstens einen bestehenden Einstelldatensatzes bzw. zum Berechnen des weiteren Einstelldatensatzes verwendet.

Weitere Vorteile ergeben sich aus den Unteransprüchen und der nachfolgenden Beschreibung bevorzugter Ausführungsbeispiele. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand von in den Figuren dargestellten Ausführungsbeispielen näher erläutert. Es zeigen:
- Fig. 1: eine schematische Darstellung einer mit einem Prozessor zusammenwirkenden Spritzgießmaschine, der bedarfsweise Zugriff auf eine Datenbank hat,
- Fig. 2: eine schematische Darstellung des Prozessors und der ihm zugänglichen Informationen,
- Fig. 3: eine schematische Darstellung von mehreren mit einer lokalen Datenbank in Verbindung stehenden Spritzgießmaschinen,
- Fig. 4: einen Verfahrensablauf für die Erstellung eines lauffähigen Einstelldatensatzes,
- Fig. 5: ein abgewandelter Verfahrensablauf mit integrierter Lauffähigkeitsprüfung

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

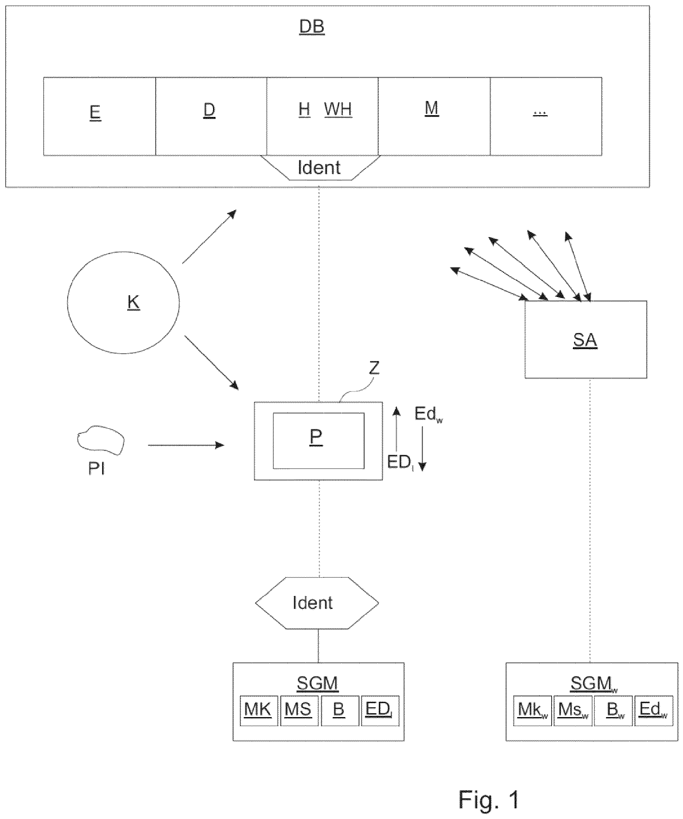

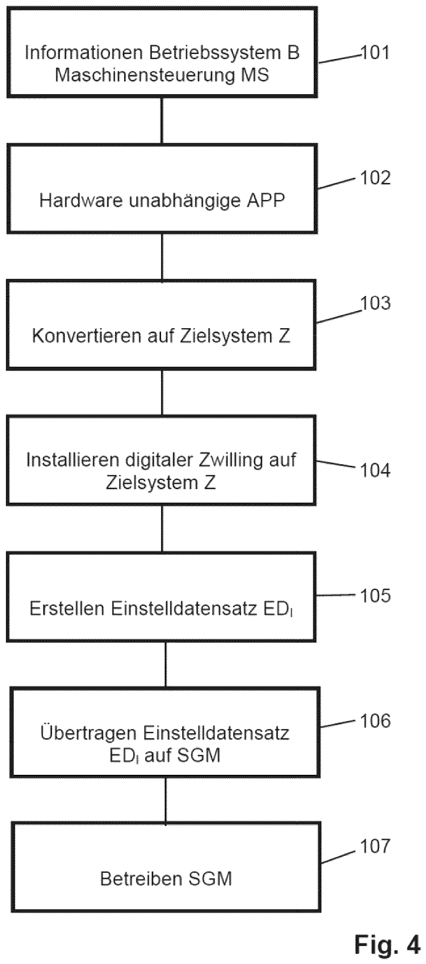

Die Figuren zeigen ein Verfahren, das zum Bereitstellen eines Betriebssystems B einer Maschinensteuerung MS für eine Spritzgießmaschine SGM, SGM₁ zur Verarbeitung von Kunststoffen und anderen plastifizierbarer Massen geeignet ist. Dabei wird das Betriebssystem B der Maschinensteuerung MS auf einem von der Spritzgießmaschine unabhängigen Zielsystem Z mit einem Prozessor P bereitgestellt. Dies wird im Folgenden anhand der Figur 1 in Verbindung mit Figur 4 erläutert.

Erfindungsgemäß soll grundsätzlich eine Kopie eines Betriebssystems einer Maschinensteuerung auf einem beliebigen Computer benutzt werden können. Diese vorzugsweise identische Kopie wird auf einem Zielsystem Z so installiert, dass nur die durch das Zielsystem vorgegebenen spezifischen Anforderungen für Anzeigegerät und Eingabe- und Ausgabeeinheit bei der Installation angepasst werden. Hierfür werden die für das Zielsystem Z spezifischen und zur Maschinensteuerung MS unterschiedlichen Treiber installiert. Dazu wird eine Hardware unabhängige App für das Betriebssystem der Maschinensteuerung MS bereitgestellt (Schritt 102, 103). Ebenso werden Informationen über das Betriebssystem B der Maschinensteuerung MS einer ersten Spritzgießmaschine SGM, SGM₁ bereitgestellt, welches mittels Konfigurationsdaten einer ersten Maschinenkonfiguration MK₁ auf die Eigenschaften der ersten Spritzgießmaschine SGM, SGM₁ konfigurierbar oder anpassbar ist (Schritt 101). Damit ist die Maschinensteuerung MS bzw. ihr Betriebssystem B an und für sich schon auf die Eigenschaften der tatsächlich vorhandenen Spritzgießmaschine angepasst.

Mit dem vorzugsweise identischen Konfigurationsfile der Maschinensteuerung MS, bidirektional konvertiert eventuell auf die jeweiligen Ein- und Ausgabeeinheiten der verwendeten Systeme und insbesondere des vorzugsweise offline verwendeten Zielsystems Z, wird damit auch die Maschinensteuerung MS auf dem Zielsystem Z zu einem Steuerungsabbild in Form eines digitalen Zwillings der realen Maschine (Schritt 104).

Auf dem Zielsystem Z kann nun wenigstens ein neuer, weiterer Einstelldatensatz ED_{w} erstellt oder wenigstens ein bestehender Einstelldatensatz EDₗ verändert werden, der zur Herstellung von Spritzteilen auf der Spritzgießmaschine SGM, SGM1 lauffähig ist (Schritt 105). Dies ist in Fig. 1 zu erkennen, in der die in Fig. 1 unten in der Mitte befindliche Spritzgießmaschine SGM mit dem Prozessor P des Zielsystems Z verbunden ist. Von dort kann der lauffähige Einstelldatensatz EDₗ benutzt werden, um einen weiteren Einstelldatensatz ED_{w} zu generieren und gegebenenfalls an die Spritzgießmaschine zurückzugeben. Hierzu werden die auf dem Zielsystem Z erstellten oder veränderten weiteren Einstelldatensätze ED_{w} auf die erste Spritzgießmaschine SGM, SGM₁ übertragen (Schritt 106). Dort kann mit dem auf dem Zielsystem erstellten oder veränderten Einstelldatensatz ED_{w} die Spritzgießmaschine betrieben werden (Schritt 107).

Vorzugsweise wird der digitale Zwilling der Maschinensteuerung MS auf dem Zielsystem Z offline von der ersten Spritzgießmaschine SGM, SGM1 und/oder auf dem Zielsystem als Plattformlösung in der Cloud betrieben. Insbesondere hierzu ist gegebenenfalls eine Identifizierung über ein Identifizier Ident erforderlich. Während beim lokalen verfahrensgemäßen Betrieb die Maschine über die Maschinennummer identifiziert werden kann, und die zugehörigen Daten auf einem lokalen Server vorliegen, identifiziert sich ein Kunde bei einer Cloud-Lösung über einen dem Kunden zugewiesenen Schlüssel oder ein Passwort. In jedem Fall sind die jeweiligen Datensätze transportabel und werden als Systemfile für die jeweilige Maschine im Rahmen der Verarbeitung geprüft.

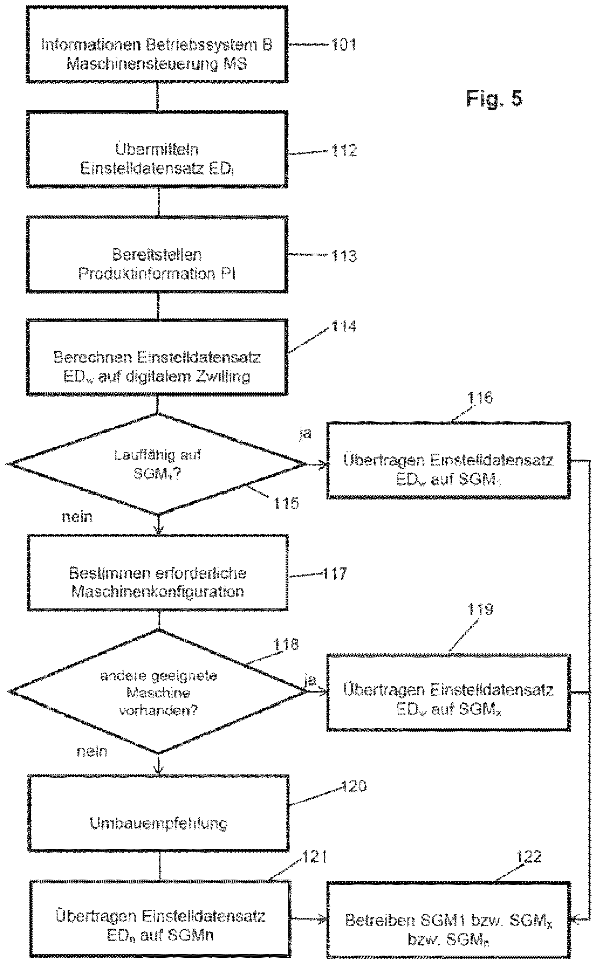

Verfahrensgemäß wird ein erster auf der ersten Spritzgießmaschine lauffähiger Einstelldatensatz EDₗ an das Zielsystem Z übermittelt, wobei zu diesem Zeitpunkt bereits Informationen über das Betriebssystem B der Maschinensteuerung MS vorliegen (Schritt 101, 112 in Fig. 5). Ergänzend werden Produktinformationen PI gemäß Fig. 1, Fig. 5 (Schritt 113) über ein auf einer Spritzgießmaschine als Spritzteil zu fertigendes Produkt bereitgestellt (Schritt 113). Unter Verwendung der Informationen über die erste Maschinenkonfiguration MK₁ sowie des auf der Spritzgießmaschine lauffähigen Einstelldatensatzes EDₗ wird nun ein weiterer Einstelldatensatz ED_{w} zur Herstellung des zu fertigenden Produktes berechnet (Schritt 114), wobei die Berechnung gemäß Fig. 1 auf einem Prozessor P erfolgt. Hierfür ist weder ein Postprozessor erforderlich noch ein virtuelles Modell der Spritzgießmaschine.

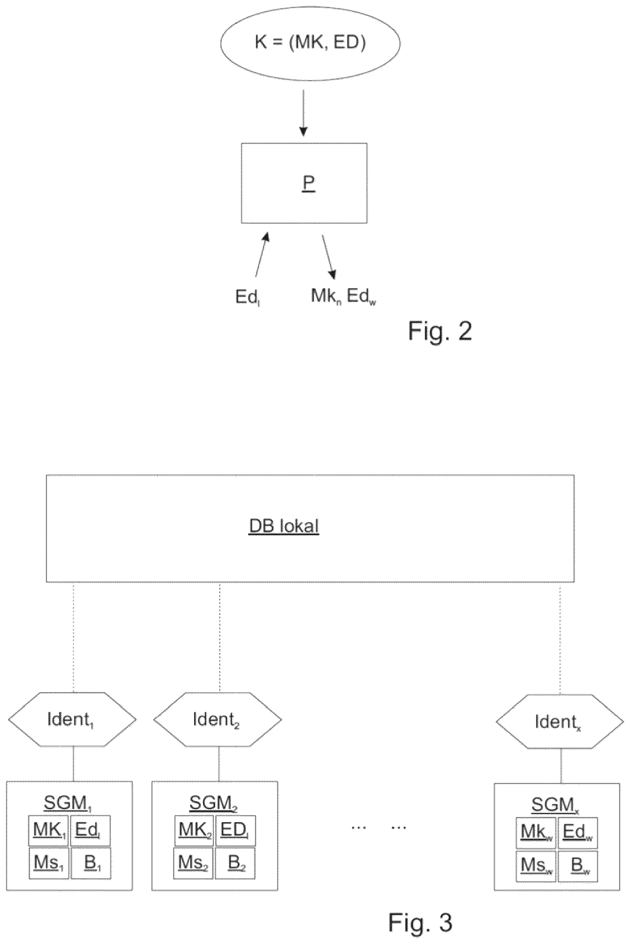

Im Anschluss wird der auf dem digitalen Zwilling berechnete weitere Einstelldatensatz an die erste Spritzgießmaschine SGM₁ oder wenigstens eine andere Spritzgießmaschine SGM, SGM₂, ..., SGMₓ übermittelt, wie dies für den letzteren Fall in Fig. 3 dargestellt ist. So kann die jeweilige Spritzgießmaschine mit dem weiteren Einstelldatensatz ED_{w} zur Herstellung des zu fertigenden Produkts betrieben werden.

Bereits Fig. 1 und auch Fig. 2 zeigen, dass gegebenenfalls ein Expertenwissen K bereitgestellt wird. Dieses Expertenwissen K beinhaltet Informationen darüber, welche Komponenten und welche Konfiguration eine Maschinenkonfiguration MK aufweisen muss, damit ein weiterer Einstelldatensatz ED_{w} auf einer Spritzgießmaschine lauffähig ist bzw. wird.

Von Vorteil ist es, wenn zu diesem Zeitpunkt, d.h. nach dem Bereitstellen des Einstelldatensatzes und gegebenenfalls auch auf der Grundlage des Expertenwissens K überprüft wird, ob der weitere Einstelldatensatz ED_{w} auf der ersten Spritzgießmaschine SGM₁ überhaupt lauffähig ist (Schritt 115). Ist dies der Fall, so kann die jeweilige Spritzgießmaschine SGM₁ den Einstelldatensatz ED_{w} erhalten und damit auch betrieben werden (Schritt 116, 122).

Ist dies allerdings nicht der Fall, so ist der Prozessor aufgrund der ihm bereitgestellten Informationen in der Lage, eine für die Herstellung eines zu fertigenden Spritzteils erforderliche Maschinenkonfiguration MKₙ zu bestimmen (Schritt 117). In diesem Fall wird im nächsten Schritt 118 zunächst abgefragt, ob bei einem Benutzer mehrere Spritzgießmaschinen vorhanden sind, um zu ermitteln, ob eine erforderliche Maschinenkonfiguration MKₙ auf einer anderen der beim Benutzer vorhandenen Spritzgießmaschine SGM₂, ..., SGMₓ vorhanden ist. Sollte dies der Fall sein, kann nämlich das zu fertigende Spritzteil an der ermittelten anderen Spritzgießmaschine mit dem weiteren Einstelldatensatz ED_{w} betrieben werden. Wenn also eine andere geeignete Maschine im Schritt 118 ermittelt werden kann, wird der Einstelldatensatz gemäß Schritt 119 auf die ermittelte Spritzgießmaschine übertragen und diese gemäß Schritt 122 entsprechend betrieben. Kann keine andere Spritzgießmaschine ermittelt werden, wird der Benutzer entsprechend benachrichtigt.

Diese Benachrichtigung hat für den Benutzer den Vorteil, dass er nun darüber informiert ist, dass im Moment auf seiner Spritzgießmaschine das Produkt nicht gefertigt werden kann. Dadurch kann frühzeitig darauf eingewirkt werden, dass entsprechende Umbauarbeiten in die Wege geleitet werden oder über Alternativen nachgedacht wird. Vorzugsweise enthält die Benachrichtigung des Benutzers Informationen darüber, mit welchen Komponenten die Maschinenkonfiguration MK₁, MK so angepasst und umgebaut werden kann, dass der weitere Einstelldatensatz ED_{w} auf der Spritzgießmaschine lauffähig ist (Schritt 120). Grundsätzlich erhält der Benutzer damit Informationen, wie er seine Maschinen umbauen kann, so dass doch noch eine Fertigung des zu fertigenden Spritzteils möglich wird. Ist die Spritzgießmaschine entsprechend umgebaut, kann dann der neue Einstelldatensatz EDₙ auf die entsprechend umgebaute Spritzgießmaschine SGMₙ übertragen werden (Schritt 121) und die Spritzgießmaschine entsprechend betrieben werden (Schritt 122).

Gemäß Fig. 1 wird vorzugsweise die Maschinenkonfiguration MK₁, MK einer Spritzgießmaschine SGM, SGM₁ in Richtung auf den Prozessor P über einen Identifizierer Ident, der vorzugsweise die Maschinennummer oder ein dem Benutzer bekanntes Passwort oder Schlüssel ist, so identifiziert, dass sich ein Zugang zur aktuellen Maschinenkonfiguration in einer Datenbank DB ergibt. In dieser Datenbank sind wenigstens folgende Informationen enthalten:
- Konfigurationsdaten einer Maschinenkonfiguration MK, MK₁, MK_{w}, MK2, ..., MKₓ,
- Wissensdaten eines Expertenwissens K,
- Softwarefunktionalitätsdaten des Betriebssystems B der Maschinensteuerung MS oder der Spritzgießmaschine.

Wie in Fig. 1 oben zu erkennen, hat diese Datenbank noch weitere Informationen, denn vorzugsweise liegen in dieser Datenbank, die besonders bevorzugt eine Datenbank beim Hersteller ist, folgende Informationen für den Zugriff bereit:
- aktuelle Ausstattung E und Maschinenkonfiguration MK einer jeweiligen, über den Identifizierer Ident identifizierbaren Spritzgießmaschine,
- Informationen über weitere Ausbaumöglichkeiten M der Ausstattung E als auch der

Maschinenkonfiguration MK der jeweiligen, identifizierbaren Spritzgießmaschine. Optional können auch die folgenden Informationen zumindest teilweise in der Datenbank DB vorhanden sein:
- eine Historie H der identifizierbaren Spritzgießmaschine im Hinblick auf Auslieferungszustand und seit der Auslieferung erfolgte spätere Umbauten,
- eine Wartungshistorie WH im Hinblick auf erfolgte Wartungsarbeiten,
- - Informationen über auf der Spritzgießmaschine bereits in der Vergangenheit erstellter Datensätze D, die für die Herstellung von zu fertigenden Spritzteilen auf der Spritzgießmaschine lauffähig waren,
- sofern beim Benutzer mehrere Spritzgießmaschinen betrieben werden, eine Zuordnung und Verknüpfung dieser mehreren Spritzgießmaschinen miteinander.

Vorzugsweise kann der Prozessor P die Datenbank DB zum Erhalt weiterer Informationen und/oder zum Abgleich von Informationen kontaktieren, insbesondere wenn es darum geht, einen entsprechend angepassten weiteren Einstelldatensatz ED_{w} zu erstellen.

Von Vorteil ist es ebenfalls, wenn die in Figur 1 oben dargestellte Datenbank DB extern vorhanden ist, also d.h. z.B. beim Hersteller und eine Zuordnung des Prozessors P zu dieser Datenbank DB erfolgt. In diesem Fall kann das Verfahren auch auf einem Prozessor P beim Hersteller durchgeführt werden. Die Daten können auf beliebige Art und Weise für den Benutzer bereitgestellt werden, wobei ein Zugang über eine App, über das Internet oder eine Cloud-basierte Lösung denkbar sind.

Sind beim Benutzer mehrere Spritzgießmaschinen vorhanden, so ist auch möglich, eine Vorauswahl von Maschinen zu bestimmen, die für den weiteren Einstelldatensatz ED_{w} geeignet sind und auch diese entsprechend zu konditionieren. Damit ergibt sich die Möglichkeit einer Betriebsplanung für den Benutzer, um möglichst effizient und effektiv hochwertige Spritzteile zeitoptimiert fertigen zu können.

Mit all diesen Informationen ist der Prozessor P gemäß Fig. 2 in der Lage, bei Vorliegen eines lauffähigen Einstelldatensatzes EDₗ mit einem Expertenwissen K über mögliche Maschinenkonfigurationen und Einstelldatensätze eine neue Maschinenkonfiguration MKₙ vorzuschlagen und einen weiteren Einstelldatensatz ED_{w} zu generieren. Ebenso ist der Prozessor P aber auch in der Lage, ohne Kenntnis eines bestehenden Einstelldatensatzes EDₗ einen neuen Einstelldatensatz EDₙ zu erzeugen.

Ergänzend können Update-Informationen für eine Spritzgießmaschine auf der Datenbank DB bereitgestellt werden, wobei diese Update-Informationen insbesondere Updates für die Maschinenkonfiguration MK sowie einen dadurch geänderten Funktionsumfang der Spritzgießmaschine umfassen. Dadurch ist es z.B. möglich, einen neuen Einstelldatensatz EDₙ bereitzustellen, der auf der Spritzgießmaschine auf der Grundlage der Update-Informationen betrieben werden kann oder zumindest betrieben werden könnte. Dies gibt dem Benutzer die Möglichkeit, sich darüber zu informieren, mit welchem Update er gegebenenfalls seine Maschine noch effizienter betreiben kann.

Über die Datenbank DB, insbesondere wenn sie beim Hersteller bereitgestellt wird, können auch mittels dem in Figur 1 auf der rechten Seite dargestellten Ähnlichkeitsassistenten SA Ähnlichkeiten ermittelt werden. Hierzu werden vorzugsweise anonymisiert Ähnlichkeiten zwischen bereits gefertigten Produkten und zu fertigenden Produkten ebenso zur Verfügung gestellt, wie Ähnlichkeiten zwischen Maschinenkonfigurationen MK, mit denen Produkte bereits gefertigt wurden, und Maschinenkonfigurationen, mit denen Produkte zu fertigen sind. Dies erfolgt anhand von Spritzgießmaschinen SGM, die vorzugsweise bei verschiedenen Benutzern vorhanden sind, um damit einen Informationspool nutzbar zu machen. Die ermittelten Ähnlichkeiten werden dann zum Erstellen des wenigstens einen neuen oder Verändern des wenigstens einen bestehenden Einstelldatensatzes EDₗ verwendet bzw. zum Berechnen des weiteren Einstelldatensatzes ED_{w}.

### Bezugszeichenliste

- B: Betriebssystem
- D: Datensätze
- DB: Datenbank
- DB lokal: lokale Datenbank
- E: Ausstattung
- EDₗ: lauffähiger Einstelldatensatz
- ED_{w}: weiterer Einstelldatensatz
- EDₙ: neuer Einstelldatensatz
- H: Historie
- Ident: Identifizierer
- K: Expertenwissen
- M: Modifikationsmöglichkeiten
- MS: Maschinensteuerung
- MK: Maschinenkonfiguration
- MK₁: erste Maschinenkonfiguration
- MKₙ: erforderliche Maschinenkonfiguration
- P: Prozessor
- PI: Produktinformation
- SA: Ähnlichkeitsassistent
- SGM: Spritzgießmaschine
- SGM₁: erste Spritzgießmaschine
- SGM₂,... SGMₓ: weitere Spritzgießmaschine
- WH: Wartungshistorie
- Z: Zielsystem

## Patentansprüche

1. Verfahren zum Bereitstellen eines Betriebssystems (B) einer Maschinensteuerung für eine Spritzgießmaschine (SGM, SGM₁) zur Verarbeitung von Kunststoffen und anderer plastifizierbarer Massen
**dadurch gekennzeichnet, dass** das Bereitstellen von Informationen über das Betriebssystem (B) auf einem von der Spritzgießmaschine unabhängigen Zielsystem (Z) mit einem Prozessor (P) stattfindet und folgende Schritte aufweist:
a) Bereitstellen von Informationen über ein Betriebssystem (B) einer Maschinensteuerung (MS) einer ersten Spritzgießmaschine (SGM, SGM₁), welches mittels Konfigurationsdaten einer ersten Maschinenkonfiguration (MK₁) auf die Eigenschaften der ersten Spritzgießmaschine (SGM, SGM₁) konfigurierbar oder anpassbar ist,
b) Bereitstellen einer Hardware unabhängigen App für das Betriebssystem (B) der Maschinensteuerung (MS),
c) Installieren des Betriebssystems (B) für die Maschinensteuerung (MS) mit allen Konfigurationsdaten als digitaler Zwilling auf dem Zielsystem (Z) unter Verwendung der Hardware unabhängigen App zur Konvertierung der Informationen über das Betriebssystem (B) der Maschinensteuerung (MS) an das Zielsystem (Z), wobei ein Konfigurationsfile der Maschinensteuerung zur offline-Erstellung oder -Änderung von Einstelldatensätzen bidirektional konvertiert an das Zielsystem angepasst ist,
d) Erstellen wenigstens eines neuen oder Verändern wenigstens eines bestehenden Einstelldatensatzes (EDₗ) zur Herstellung von Spritzteilen, der auf der ersten Spritzgießmaschine (SGM, SGM₁) lauffähig ist, auf dem Zielsystem (Z),
e) Übertragen eines auf dem Zielsystem (Z) erstellten oder veränderten weiteren Einstelldatensatzes (ED_{w}) auf die erste Spritzgießmaschine (SGM, SGM₁),
f) Betreiben der ersten Spritzgießmaschine (SGM, SGM₁) mit dem weiteren Einstelldatensatzes (ED_{w}).

2. Verfahren nach Anspruch 1, wobei der digitale Zwilling auf dem Zielsystem offline von der ersten Spritzgießmaschine (SGM, SGM₁) und/oder auf dem Zielsystem (Z) als Plattformlösung in der Cloud betrieben wird.

3. Verfahren nach Anspruch 1 oder 2, wobei es ferner die Schritte umfasst:
g) Übermitteln des wenigstens einen auf der ersten Spritzgießmaschine lauffähigen Einstelldatensatzes (EDₗ) an das Zielsystem (Z),
h) Bereitstellen von Produktinformationen (PI) über ein auf einer Spritzgießmaschine als Spritgießteil zu fertigendes Produkt an das Zielsystem (Z),
i) Berechnen des weiteren Einstelldatensatzes (ED_{w}) zur Herstellung des zu fertigenden Produkts unter Verwendung der Information über die erste Maschinenkonfiguration (MK₁) sowie des auf der Spritzgießmaschine lauffähigen Einstelldatensatzes (EDₗ) auf dem Zielsystem (Z), wobei die Berechnung auf einem Prozessor (P) ohne einen Postprozessor und ohne ein virtuelles Modell der Spritzgießmaschine erfolgt,
j) Übermitteln des weiteren Einstelldatensatzes (ED_{w}) vom Zielsystem (Z) an die erste Spritzgießmaschine (SGM₁) oder wenigstens eine andere Spritzgießmaschine (SGM, SGM₂,...SGMₓ),
k) Betreiben der ersten Spritzgießmaschine (SGM1) oder einer anderen Spritzgießmaschine mit dem weiteren Einstelldatensatz (ED_{w}) zur Herstellung des zu fertigenden Produkts.

4. Verfahren nach einem der vorhergehenden Ansprüche, wobei es folgende weiteren Schritte umfasst:
- Bereitstellen eines Expertenwissens (K) darüber, welche Komponenten und welche Konfiguration eine Maschinenkonfiguration (MK) aufweisen muss, damit der weitere Einstelldatensatz (ED_{w}) auf einer Spritzgießmaschine lauffähig ist.

5. Verfahren nach einem der Ansprüche 3 oder 4, wobei es folgende weiteren Schritte umfasst:
- Überprüfen nach Schritt (i) von Anspruch 3 anhand des Expertenwissens (K) und/oder anhand der an der jeweiligen Spritzgießmaschine bestehenden Maschinenkonfiguration (MK), ob der weitere Einstelldatensatz (ED_{w}) auf der ersten Spritzgießmaschine (SGM₁) lauffähig ist,
- bejahendenfalls, Durchführung der Schritte (j) und (k),
- verneinendenfalls, Bestimmen einer erforderlichen Maschinenkonfiguration (MKₙ),
- falls bei einem Benutzer mehrere Spritzgießmaschinen vorhanden sind, Ermitteln, ob eine erforderliche Maschinenkonfiguration (MKₙ) auf einer anderen der beim Benutzer vorhandenen Spritzgießmaschine(n) (SGM₂,...,SGMₓ) vorhanden ist und Übermitteln des weiteren Einstelldatensatzes (ED_{w}) an die ermittelte andere Spritzgießmaschine,
- falls keine andere Spritzgießmaschine ermittelbar ist, Benachrichtigen des Benutzers.

6. Verfahren nach Anspruch 5, wobei die Benachrichtigung des Benutzers Informationen darüber enthält, mit welchen Komponenten die Maschinenkonfiguration (MK₁; MK) so angepasst und umgebaut werden kann, dass der weitere Einstelldatensatz (ED_{w}) auf der Spritzgießmaschine lauffähig ist.

7. Verfahren nach einem der vorhergehenden Ansprüche, **dadurch gekennzeichnet, dass** die Maschinenkonfiguration (MK₁; MK) einer Spritzgießmaschine (SGM, SGM₁) in Richtung auf den Prozessor (P) über einen Identifizierer (Ident), vorzugsweise über die Maschinenummer, identifiziert wird, unter der die aktuelle Maschinenkonfiguration in einer Datenbank (DB) hinterlegt ist, in der wenigsten eine der folgenden Informationen enthalten ist: Konfigurationsdaten, Wissensdaten eines Expertenwissens (K), Softwarefunktionalitätsdaten des Betriebssystems (B) der Maschinensteuerung (MS) oder der Spritzgießmaschine (SGM, SGM₁).

8. Verfahren nach einem der vorhergehenden Ansprüche mit den Schritten:
- Bereitstellen einer Datenbank (DB), vorzugsweise einer Datenbank beim Hersteller, in der folgende Informationen enthalten sind:
- aktuelle Ausstattung (E) und Maschinenkonfiguration (MK) einer jeweiligen, identifizierbaren Spritgießmaschine,
- weitere Ausbaumöglichkeiten (M) der Ausstattung (E) und Maschinenkonfiguration (MK) der jeweiligen, identifizierbaren Spritzgießmaschine,
sowie folgende Informationen optional insgesamt oder teilweise enthalten sind:
- Historie (H) der identifizierbaren Spritzgießmaschine im Hinblick auf Auslieferungszustand und spätere Umbauten,
- Wartungshistorie (WH) im Hinblick auf erfolgte Wartungsarbeiten,
- auf der Spritzgießmaschine bereits erstellte Datensätze (D), die für die Herstellung von Produkten auf der Spritzgießmaschine lauffähig waren,
- sofern mehrere Spritzgießmaschinen bei einem Benutzer vorhanden sind, Zuordnung und Verknüpfung dieser mehreren Spritzgießmaschinen,
- Kontaktieren der Datenbank (DB) durch den Prozessor (P) zum Erhalt weiterer Informationen und/oder zum Abgleich von Informationen.

9. Verfahren nach einem der vorhergehenden Ansprüche mit den Schritten:
Zuordnung des Prozessors (P) zu der Datenbank (DB) beim Hersteller und Durchführung des Verfahrens auf dem Prozessor (P) beim Hersteller.

10. Verfahren nach einem der Ansprüche 3 bis 9 mit dem Schritt:
sofern mehrere Spritzgießmaschinen bei einem Benutzer vorhanden sind, Bestimmen einer Vorauswahl an für den weiteren Einstelldatensatz (ED_{w}) geeigneten Spritzgießmaschinen nach Schritt (i) von Anspruch 3.

11. Verfahren nach einem der vorhergehenden Ansprüche mit den Schritten:
- Bereitstellen von Update-Informationen für eine Spritzgießmaschine auf der Datenbank (DB), wobei die Update-Informationen insbesondere Updates für die Maschinenkonfiguration (MK) sowie einen dadurch geänderten Funktionsumfang an der Spritzgießmaschine umfassen,
- Bereitstellen eines neuen Einstelldatensatzes (EDₙ) für die Spritzgießmaschine auf der Grundlage der Update-Informationen.

12. Verfahren nach einem der vorhergehenden Ansprüche mit den Schritten:
- Bereitstellen eines Ähnlichkeitsassistenten (SA) zum Ermitteln von vorzugsweise anonymisierten Ähnlichkeiten zwischen bereits gefertigten Produkten und zu fertigenden Produkten und zwischen den Maschinenkonfigurationen (MK), mit denen Produkte bereits gefertigt wurden und zu fertigen sind, anhand von Spritzgießmaschinen (SGM), die bei verschiedenen Benutzern vorhanden sind,
- Verwenden der ermittelten Ähnlichkeiten zum Erstellen des wenigstens einen neuen oder Verändern des wenigstens einen bestehenden Einstelldatensatzes (EDₗ) bzw. zum Berechnen des weiteren Einstelldatensatzes (ED_{w}).

## Claims

1. Method for providing an operating system (B) of a machine control system for an injection moulding machine (SGM, SGM₁) for processing plastics and other plasticisable masses
**characterised in that** the provision of information relating to the operating system (B) takes place on a target system (Z) with a processor (P), said target system being independent of the injection moulding machine, and has the following steps:
(a) providing information relating to an operating system (B) of a machine control system (MS) of a first injection moulding machine (SGM, SGM₁), said operating system being configurable or adaptable by means of configuration data of a first machine configuration (MK₁) to the properties of the first injection moulding machine (SGM, SGM₁),
(b) providing a hardware-independent app for the operating system (B) of the machine control system (MS),
(c) installing the operating system (B) for the machine control system (MS) with all the configuration data as a digital twin on the target system (Z) using the hardware-independent app for converting the information relating to the operating system (B) of the machine control system (MS) to the target system (Z), wherein a configuration file of the machine control system is adapted bidirectionally converted to the target system for offline creation or modification of settings datasets,
(d) creating at least one new, or modifying at least one existing, settings dataset (EDₗ) on the target system (Z) for producing injection moulded parts, which is executable on the first injection moulding machine (SGM, SGM₁),
(e) transferring a further settings dataset (ED_{w}) created or modified on the target system (Z) to the first injection moulding machine (SGM, SGM₁),
(f) operating the first injection moulding machine (SGM, SGM₁) with the further settings dataset (ED_{w}).

2. Method according to claim 1, wherein the digital twin is operated on the target system offline from the first injection moulding machine (SGM, SGM₁) and/or on the target system (Z) as a platform solution in the cloud.

3. Method according to claim 1 or 2, wherein it further comprises the steps:
(g) transferring the at least one settings dataset (EDₗ) that is executable on the first injection moulding machine to the target system (Z),
(h) providing product information (PI) to the target system (Z) relating to a product to be produced on an injection moulding machine as an injection moulded part,
(i) calculating the further settings dataset (ED_{w}) for producing the product to be produced using the information relating to the first machine configuration (MK₁) and the settings dataset (EDₗ) executable on the injection moulding machine, on the target system (Z), wherein the calculation takes place on a processor (P) without a postprocessor and without a virtual model of the injection moulding machine,
(j) transferring the further settings dataset (ED_{w}) from the target system (Z) to the first injection moulding machine (SGM₁) or at least one other injection moulding machine (SGM, SGM₂, ..., SGMX),
(k) operating the first injection moulding machine (SGM₁) or another injection moulding machine with the further settings dataset (ED_{w}) for producing the product to be produced.

4. Method according to one of the preceding claims, wherein it comprises the following further step:
- providing an expert knowledge set (K) regarding which components and which configurations a machine configuration (MK) must have so that the further settings dataset (ED_{w}) is executable on an injection moulding machine.

5. Method according to one of the claims 3 or 4, wherein it comprises the following further steps:
- checking after step (i) of claim 3 on the basis of the expert knowledge set (K) and/or on the basis of the machine configuration (MK) present on the respective injection moulding machine whether the further settings dataset (ED_{w}) is executable on the first injection moulding machine (SGM₁) ,
- if the answer is positive, carrying out steps (j) and (k),
- if the answer is negative, determining a necessary machine configuration (MKₙ),
- if a plurality of machines is available at a user, determining whether a required machine configuration (MKₙ) is present on another of the injection moulding machines (SGM₂, ..., SGMX) available at the user and transferring the further settings dataset (ED_{w}) to the identified other injection moulding machine,
- if no other injection moulding machine is identifiable, notifying the user.

6. Method according to claim 5, wherein the notification of the user contains information concerning with which components the machine configuration (MK₁; MK) can be adapted and reconfigured so that the further settings dataset (ED_{w}) is executable on the injection moulding machine.

7. Method according to one of the preceding claims, **characterised in that** the machine configuration (MK₁; MK) of an injection moulding machine (SGM, SGM₁) is identified in the direction toward the processor (P) by means of an identifier (Ident), preferably by means of the machine number under which the current machine configuration is stored in a database (DB) in which at least one of the following information items is contained: configuration data, knowledge data of an expert knowledge set (K), software functionality data of the operating system (B) of the machine control system (MS) or the injection moulding machine (SGM, SGM₁).

8. Method according to one of the preceding claims, having the steps:
- providing a database (DB), preferably a database at the manufacturer in which the following information items are contained:
- current equipment (E) and machine configuration (MK) of a respective identifiable injection moulding machine,
- further extension possibilities (M) of the equipment (E) and the machine configuration (MK) of the respective identifiable injection moulding machine,
and the following information items are contained wholly or partially:
- history (H) of the identifiable injection moulding machine with regard to the delivery status and later reconfigurations,
- service history (WH) with regard to service operations carried out,
- datasets (D) already created on the injection moulding machine which were executable for the production of products on the injection moulding machine,
- if a plurality of injection moulding machines is available at a user, association and linking of this plurality of injection moulding machines,
- contacting the database (DB) by the processor (P) for obtaining further information and/or for the reconciliation of information.

9. Method according to one of the preceding claims, having the steps:
associating the processor (P) with the database (DB) at the manufacturer and carrying out the method on the processor (P) at the manufacturer.

10. Method according to one of the claims 3 to 9, having the step:
if a plurality of injection moulding machines is available at a user, determining a preselection of injection moulding machines suitable for the further settings dataset (ED_{w}) according to step (i) of claim 3.

11. Method according to one of the preceding claims, having the steps:
- providing update information for an injection moulding machine on the database (DB), wherein the update information comprises, in particular, updates for the machine configuration (MK) and a functional scope of the injection moulding machine modified thereby,
- providing a new settings dataset (EDₙ) for the injection moulding machine on the basis of the update information.

12. Method according to one of the preceding claims having the steps:
- providing a similarity assistant (SA) for identifying preferably anonymised similarities between already produced products and products to be produced and between the machine configurations (MK) with which products have already been produced and are to be produced using injection moulding machines (SGM) that exist with different users,
- using the identified similarities for creating the at least one new, or for modifying the at least one existing, settings dataset (EDₗ) and/or for calculating the further settings dataset (ED_{w}).

## Revendications

1. Procédé pour fournir un système d'exploitation (B) d'une commande de machine pour une machine de moulage par injection (SGM, SGM₁) pour la transformation de matières plastiques et d'autre masses plastifiables,
**caractérisé en ce que** la fourniture d'informations sur le système d'exploitation (B) a lieu sur un système cible indépendant de la machine de moulage par injection (Z) avec un processeur (P) et comporte les étapes suivantes :
a) fourniture d'informations sur un système d'exploitation (B) d'une commande de machine (MS) d'une première machine de moulage par injection (SGM, SGM₁), lequel système d'exploitation est configurable ou adaptable au moyen de données de configuration d'une première configuration de machine (MK₁) sur les propriétés de la première machine de moulage par injection (SGM, SGM₁),
b) fourniture d'une application indépendante du matériel informatique pour le système d'exploitation (B) de la commande de machine (MS),
c) installation du système d'exploitation (B) pour la commande de machine (MS) avec toutes les données de configuration en tant que jumeau numérique sur le système cible (Z) en utilisant l'application indépendante du matériel informatique pour la conversion des informations sur le système d'exploitation (B) de la commande de machine (MS) sur le système cible (Z), un fichier de configuration de la commande de machine étant adapté au système cible de manière convertie et bidirectionnelle pour la création ou la modification hors ligne d'ensembles de données de réglage,
d) création d'au moins un nouvel ensemble de données de réglage (EDi) ou modification d'au moins un ensemble de données de réglage (EDi) existant pour la fabrication de pièces par moulage par injection, lequel ensemble est susceptible de fonctionner sur la première machine de moulage par injection (SGM, SGM₁), sur le système cible (Z),
e) transmission d'un autre ensemble de données de réglage (ED_{w}) créé ou modifié sur le système cible (Z) à la première machine de moulage par injection (SGM, SGM₁),
f) exploitation de la première machine de moulage par injection (SGM, SGM₁) avec l'autre ensemble de données de réglage (ED_{w}).

2. Procédé selon la revendication 1, dans lequel le jumeau numérique sur le système cible est exploité hors ligne par la première machine de moulage par injection (SGM, SGM₁) et/ou sur le système cible (Z) en tant que solution de plateforme dans le nuage informatique.

3. Procédé selon la revendication 1 ou 2, comprenant en outre les étapes suivantes :
g) communication de l'ensemble ou des ensembles de données de réglage (EDi) fonctionnant sur la première machine de moulage par injection au système cible (Z),
h) fourniture au système cible (Z) d'informations produit (PI) sur un produit à fabriquer sur une machine de moulage par injection en tant que pièce de moulage par injection,
i) calcul de l'autre ensemble de données de réglage (ED_{w}) pour la fabrication du produit à fabriquer en utilisant les informations sur la première configuration de machine (MK₁) ainsi que l'ensemble de données de réglage (ED_{I}) fonctionnant sur la machine de moulage par injection, sur le système cible (Z), le calcul s'effectuant dans un processeur (P) ou un postprocesseur et sans modèle virtuel de la machine de moulage par injection,
j) communication de l'autre ensemble de données de réglage (ED_{w}) du système cible (Z) à la première machine de moulage par injection (SGM₁) ou à au moins une autre machine de moulage par injection (SGM, SGM₂,... SGMₓ),
k) exploitation de la première machine de moulage par injection (SGM1) ou d'une autre machine de moulage par injection avec l'autre ensemble de données de réglage (ED_{w}) pour la fabrication du produit à fabriquer.

4. Procédé selon l'une des revendications précédentes, comprenant en outre les étapes suivantes :
- fourniture de connaissances d'expert (K) concernant quels composants et quelle configuration une configuration de machine (MK) doit présenter afin que l'autre ensemble de données de réglage (ED_{w}) puisse être capable de fonctionner sur une machine de moulage par injection.

5. Procédé selon l'une des revendications 3 et 4, comprenant les étapes supplémentaires suivantes :
- vérification après l'étape (i) de la revendication 3 à l'aide des connaissances d'expert (K) et/ou à l'aide de la configuration de machine (MK) se trouvant sur la machine de moulage par injection respective, si l'autre ensemble de données de réglage (ED_{w}) est capable de fonctionner sur la première machine de moulage par injection (SGM₁) ;
- dans l'affirmative, exécution des étapes (j) et (k),
- dans la négative, détermination d'une configuration de machine nécessaire (MKₙ),
- au cas où plusieurs machines de moulage par injection sont présentes chez l'utilisateur, détection si une configuration de machine nécessaire (MKₙ) est présente sur une autre des machines de moulage par injection (SGM₂, .., SGMₓ) présentes chez l'utilisateur et communication de l'autre ensemble de données de réglage (ED_{w}) à l'autre machine de moulage par injection détectée,
- au cas où aucune autre machine de moulage par injection n'est détectable, mise au courant de l'utilisateur.

6. Procédé selon la revendication 5, dans lequel la mise au courant de l'utilisateur contient des informations sur les composants avec lesquels la configuration de machine (MK₁ ; MK) peut être adaptée ou transformée de telle sorte que l'autre ensemble de données de réglage (ED_{w}) soit capable de fonctionner sur la machine de moulage par injection.

7. Procédé selon l'une des revendications précédentes, **caractérisé en ce que** la configuration de machine (MK₁, MK) d'une machine de moulage par injection (SGM, SGM1) est identifiée à l'intention du processeur (P) au moyen d'un identificateur (Ident), de préférence au moyen d'un numéro de machine, sous lequel la configuration de machine courante est consignée dans une banque de données (DB) dans laquelle au moins l'une des informations suivantes est contenue : données de configuration, données de connaissances d'expert (K), données de fonctionnalités du logiciel du système d'exploitation (B) de le commande de machine (MS) ou de la machine de moulage par injection (SGM, SGM₁).

8. Procédé selon l'une des revendications précédentes, comportant les étapes suivantes :
- fourniture d'une banque de données (DB), de préférence une banque de données chez le fabricant, dans laquelle les informations suivantes sont contenues :
- l'équipement courant (E) et la configuration de machine (MK) de la machine de moulage par injection identifiable respective,
- d'autres possibilités de montage (M) de l'équipement (E) et de la configuration de machine (MK) de la machine de moulage par injection identifiable respective,
ainsi que les informations suivantes optionnelles en totalité ou en partie :
- historique (H) de la machine de moulage par injection identifiable au vu du statut de livraison et des transformations ultérieures,
- historique de l'entretien (WH) au vu des travaux d'entretien réalisés,
- ensembles de données (D) déjà créés sur la machine de moulage par injection (D), qui fonctionnaient sur la machine de moulage par injection pour la fabrication de produits,
- dans la mesure où plusieurs machines de moulage par injection sont présentes chez un utilisateur, association et connexion entre elles de ces machines de moulage par injection,
- entrée en contact avec la banque de données (DB) par l'intermédiaire du processeur (P) pour l'obtention d'informations supplémentaires et/ou pour l'ajustement d'informations.

9. Procédé selon l'une des revendications précédentes comportant les étapes suivantes :
association du processeur (P) à la banque de données (DB) chez le fabricant et mise en œuvre du procédé sur le processeur (P) chez le fabricant.

10. Procédé selon l'une des revendications 3 à 9 comportant l'étape suivante :
dans la mesure où plusieurs machines de moulage par injection sont présentes chez un utilisateur, détermination d'une présélection de machines de moulage par injection appropriées pour l'autre ensemble de données de réglage (ED_{w}) suivant l'étape (i) de la revendication 3.

11. Procédé selon l'une des revendications précédentes, comportant les étapes suivantes :
- fourniture d'informations d'actualisation pour une machine de moulage par injection dans la banque de données, les informations d'actualisation comprenant en particulier des mises à jour pour la configuration de machine (MK) ainsi qu'une étendue de fonctions modifiée de cette manière sur la machine de moulage par injection,
- fourniture d'un nouvel ensemble de données de réglage (EDₙ) pour la machine de moulage par injection, sur la base des informations de mise à jour.

12. Procédé selon l'une des revendications précédentes, comportant les étapes suivantes :
- fourniture d'un assistant d'analogies (SA) pour la détection d'analogies de préférences anonymisées entre des produits déjà fabriqués et des produits à fabriquer et entre les configurations de machine (MK), avec lesquelles des produits ont déjà été fabriquées et sont à fabriquer, à l'aide de machines de moulage par injection (SGM) qui sont présentes chez plusieurs utilisateurs,
- utilisation des analogies détectées pour la création d'un nouvel ou de nouveaux ensemble(s) de données de réglage ou pour la modification d'un ou de plusieurs ensembles de données de réglage (EDi) existants ou pour le calcul de l'autre ensemble de données de réglage (ED_{w}).
